# FASCICULE DE BREVET EUROPEEN

(11) **EP 3 717 765 B1**
(45) Date de publication et mention de la délivrance du brevet: **15.11.2023**
(21) Numéro de dépôt: 18825757.0
(22) Date de dépôt: 27.11.2018
(51) Int. Cl.: F02K 1/72, F01D 9/06

(54) **NACELLE DE TURBORÉACTEUR COMPORTANT UN CADRE MOBILE UNIQUE D'INVERSEUR DE POUSSÉE À GRILLES ET DES PASSAGES DE SERVITUDES**
TRIEBWERKSGONDEL EINES TURBOSTRAHLTRIEBWERKES MIT EINEM EINZIGEN SCHUBUMKEHRER-FAHRGESTELL UND DURCHGÄNGEN FÜR HILFSMITTEL
TURBOJET ENGINE NACELLE COMPRISING A SINGLE CASCADE-TYPE THRUST REVERSER MOBILE FRAME AND PASSAGES FOR AUXILIARIES

(30) Priorité: 27.11.2017 FR 1761239
(43) Date de publication de la demande: 07.10.2020
(73) Titulaire: Safran Nacelles, 76700 Gonfreville l'Orcher (FR); Safran Aircraft Engines, 75015 Paris (FR)
(72) Inventeur: GUILLEMANT, Sébastien, Michel, Thierry, 76700 Gonfreville L'orcher (FR); CARUEL, Pierre, 76700 Gonfreville L'orcher (FR); KERBLER, Olivier, 76700 Gonfreville L'orcher (FR); HEAU, Alexis, 76700 Gonfreville L'orcher (FR); LEROUVREUR, Mathieu, 76700 Gonfreville L'orcher (FR); HELLEGOUARCH, Antoine Elie, 77550 Moissy-Cramayel (FR)
(74) Mandataire: Germain Maureau
(86) Numéro de dépôt international: PCT/FR2018/053007
(87) Numéro de publication internationale: WO 2019/102170

(56) Documents cités:
- FR-A1- 2 907 098
- FR-A1- 3 031 727
- FR-A1- 3 038 587
- US-A- 4 044 973
- US-A1- 2012 104 162

## Description

La présente invention concerne une nacelle pour un turboréacteur, comportant un inverseur de poussée à grilles délivrant un flux d'air froid vers l'avant.

Les turboréacteurs de motorisation des aéronefs disposés dans une nacelle, reçoivent de l'air frais venant du côté avant, et rejettent du côté arrière les gaz chauds issus de la combustion du carburant délivrant une poussée.

Pour les turboréacteurs à double flux, des aubes de soufflante disposées autour du moteur génèrent un flux secondaire important d'air froid le long d'une veine annulaire passant entre ce moteur et la nacelle, qui ajoute une poussée élevée.

Certaines nacelles comportent un système d'inversion de poussée qui ferme au moins en partie la veine annulaire d'air froid, et rejette le flux secondaire radialement vers l'extérieur en le dirigeant vers l'avant afin de générer une poussée inversée de freinage de l'aéronef. Une nacelle selon l'art antérieur est divulguée dans le document FR3038587.

Un type d'inverseur de poussée à grilles connu, présenté notamment par le document US-A1-20160160799, comporte des capots mobiles arrière coulissant axialement vers l'arrière sous l'effet de vérins, pour ouvrir des passages d'airs latéraux sur la nacelle contenant des grilles.

Les capots arrière en reculant sur des rails de guidages longitudinaux, entraînent les grilles qui se positionnent dans les passages d'airs latéraux. Des volets de fermeture ferment au moins partiellement le flux secondaire en refoulant ce flux vers les grilles qui inversent la poussée.

Les nacelles comportent généralement un passage de servitudes, comme des canalisations de fluide sous pression, des drains ou des câbles électriques, qui doivent passer en venant de la motorisation au travers d'un cadre circulaire mobile formant un contour fermé sensiblement cylindrique supportant les grilles d'inversion de poussée. Le cadre mobile est guidé par des rails longitudinaux disposés entre les grilles, fixés sur un carter intermédiaire entourant la veine d'air froid.

Sur certaines nacelles on dispose à l'opposé d'un mât réacteur porteur de l'ensemble propulsif composé du turboréacteur et de la nacelle, positionné généralement en partie supérieure, appelée aussi position 12h, une structure porteuse fixe qui porte vers l'extérieur des rails de guidage de deux demi-cadres mobiles. Chaque demi-cadre mobile porte un demi-capot symétrique d'inverseur de poussée présentant en coupe transversale une forme de « D », (appelée « D-Duct » en langue anglaise pour conduite en D).

Dans ce cas la structure porteuse fixe traversant radialement la veine annulaire permet un passage de différentes liaisons de servitudes comme des canalisations de fluide sous pression, des drains ou des câbles électriques, pour déboucher entre les demi-capots, en particulier vers le bas à l'opposé du mât réacteur.

Toutefois la structure porteuse traversant la veine annulaire augmente les pertes aérodynamiques de ce type de nacelle.

Sur d'autres nacelles on dispose un unique cadre mobile formant le tour complet de la nacelle, dont le capot présente en coupe transversale une forme de « C » (appelée « C-Duct » en langue anglaise pour conduite en C), ou en forme de « O » (appelée « O-Duct » en langue anglaise pour conduite en forme de O), comprenant dans un plan perpendiculaire à l'axe de la nacelle une unique ouverture pour laisser passer le mât réacteur.

L'unique cadre mobile porte généralement deux demi-capots, permettant de les ouvrir pour effectuer de la maintenance dans la nacelle. L'absence de structure porteuse inférieure traversant la veine d'air froid diminue les pertes aérodynamiques.

Dans ce cas un passage de servitudes radialement au travers du cadre mobile, en dehors de la zone de fixation du mât réacteur où le cadre mobile est ouvert, qui peut être à 6h, à 12h ou en n'importe quelle position angulaire, pose des problèmes de passage. En particulier la motorisation peut comporter des drains d'évacuation de fluides, qui doivent déboucher à 6h pour être dans une position basse d'évacuation de ces fluides.

Il faudrait alors pour passer les servitudes prévoir un perçage radial dans le cadre circulaire mobile supportant les grilles d'inversion de poussée et les capots. Toutefois avec une course de ce cadre mobile supérieure à sa longueur axiale, il faut alors sectionner entièrement ce cadre dans un plan axial (c'est-à-dire dans un plan contenant l'axe de la nacelle) afin de permettre le passage, ce qui diminue fortement sa rigidité.

La présente invention a notamment pour but d'éviter ces inconvénients de la technique antérieure.

Elle propose à cet effet une nacelle pour turboréacteur comportant un inverseur de poussée à grilles comprenant un cadre circulaire mobile entourant une veine d'air froid, guidé axialement par des rails longitudinaux fixés sur un carter intermédiaire entourant la veine d'air froid, et supportant des grilles d'inversion de poussée et des capots arrière mobiles, cette nacelle présentant, dans une position à 6 heures, un passage de servitudes débouchant radialement vers l'extérieur du cadre mobile, dans une zone ne comportant pas de structure porteuse traversant radialement la veine d'air froid, étant remarquable en ce que le cadre mobile est coupé dans un plan axial au niveau du passage des servitudes, et en ce que chaque bord de cette coupe du cadre mobile est relié au carter intermédiaire par une glissière ajustée sur un rail longitudinal disposé chacun d'un côté de ce passage de servitudes.

Un avantage de cette nacelle est que chaque bord de la coupe du cadre mobile est relié de manière rigide par le rail longitudinal au carter intermédiaire, ce qui redonne à ce cadre mobile une rigidité malgré sa coupe permettant le passage des servitudes.

On obtient une rigidité importante du cadre mobile de manière simple, compacte, et avec un minimum de composants permettant de conserver une masse réduite.

La nacelle selon l'invention peut comporter de plus une ou plusieurs des caractéristiques suivantes, qui peuvent être combinées entre elles.

Selon un mode de réalisation, la nacelle comporte une plaque d'obturation fixe fermant l'espace entre les deux rails recevant les glissières.

Dans ce cas, avantageusement la plaque d'obturation comporte un perçage recevant le passage des servitudes.

En particulier, la plaque d'obturation peut se prolonger par rapport à l'arrière des grilles d'une distance égale à la course dudit cadre mobile.

De plus, l'arrière des capots mobiles peut présenter une ouverture formant un passage recevant l'extrémité arrière de la plaque d'obturation quand l'inverseur de poussée est fermé.

Avantageusement, l'inverseur de poussée étant ouvert, les grilles d'inversion s'ajustent sur les glissières et la plaque d'obturation s'ajuste entre ces glissières, de manière à ne pas présenter de passage radial d'air froid en dehors de ces grilles d'inversion.

Selon un autre mode de réalisation, la nacelle comporte un carénage extérieur fixe disposé en arrière du passage des servitudes, qui s'ajuste sur la forme extérieure des capots arrière.

Ladite plaque d'obturation et ledit carénage extérieur fixe peuvent former une seule pièce.

Avantageusement les capots arrière comportent une fenêtre allongée longitudinalement, ouverte vers l'avant, recevant de manière ajustée le carénage extérieur quand l'inverseur de poussée est fermé.

Avantageusement, la nacelle comporte des tiges de liaison passant radialement à l'intérieur du carénage externe et des rails longitudinaux, reliant chacune deux verrous fixés chacun sur l'extrémité d'un capot arrière.

En particulier, le passage des servitudes peut comporter des drains d'évacuation de fluides, disposés verticalement en bas de la nacelle.

L'invention sera mieux comprise et d'autres caractéristiques et avantages apparaîtront plus clairement à la lecture de la description ci-après donnée à titre d'exemple, en référence aux dessins annexés dans lesquels :
- les figures 1 et 2 présentent une nacelle de turboréacteur selon l'art antérieur, comportant un cadre circulaire du type « O-Duct », avec l'inverseur de poussée respectivement fermé et ouvert ;
- la figure 3 présente la position d'un passage de servitudes qu'il faut prévoir en dessous de ce type de nacelle ;
- les figures 4 et 5 présentent une nacelle selon l'invention, avec l'inverseur de poussée respectivement fermé et ouvert ;
- la figure 6 présente une variante de cette nacelle avec l'inverseur de poussée ouvert, comprenant un carénage externe fixe ; et
- la figure 7 présente une coupe transversale de cette nacelle dans une section en aval du cadre mobile.

Pour plus de clarté, les éléments identiques ou similaires sont repérés par des signes de référence identiques sur l'ensemble des figures.

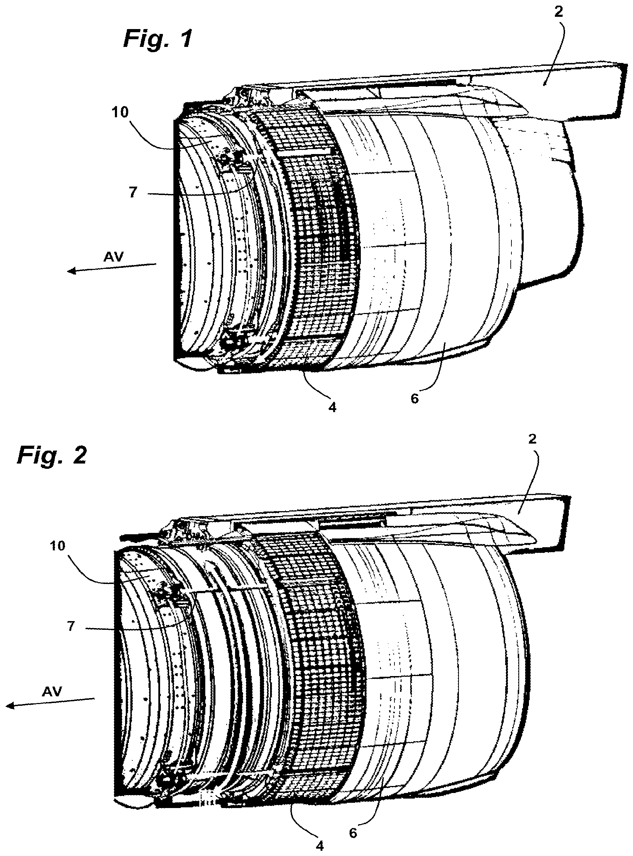

La figure 1 présente une nacelle de turboréacteur à double flux supporté par un mât réacteur 2 disposé à 12h, comportant vers l'avant indiqué par la flèche AV, un carter intermédiaire fixe 10 entourant la veine annulaire d'air froid, qui supporte par des vérins d'actionnement 7 d'un cadre mobile formant un contour rigide fermé, monté coulissant sur des rails disposés à proximité du mât réacteur 2.

Le cadre mobile supporte vers l'avant une succession de grilles 4 formant des panneaux entourant la nacelle, puis en arrière un capot arrière 6.

Dans la position de fermeture de l'inverseur de poussée, des passages d'airs latéraux entourant le flux d'air froid sont fermés par le capot 6, les grilles 4 étant insérées entre le carter intermédiaire 10 et un capot avant de la nacelle non représenté.

Dans la position d'ouverture de l'inverseur de poussée présentée figure 2, le cadre mobile recule sur ses rails de guidage sous l'effet de vérins 7, les grilles 4 venant en face des passages latéraux, et des volets intérieurs se déployant dans la veine d'air froid pour diriger le flux vers ces grilles.

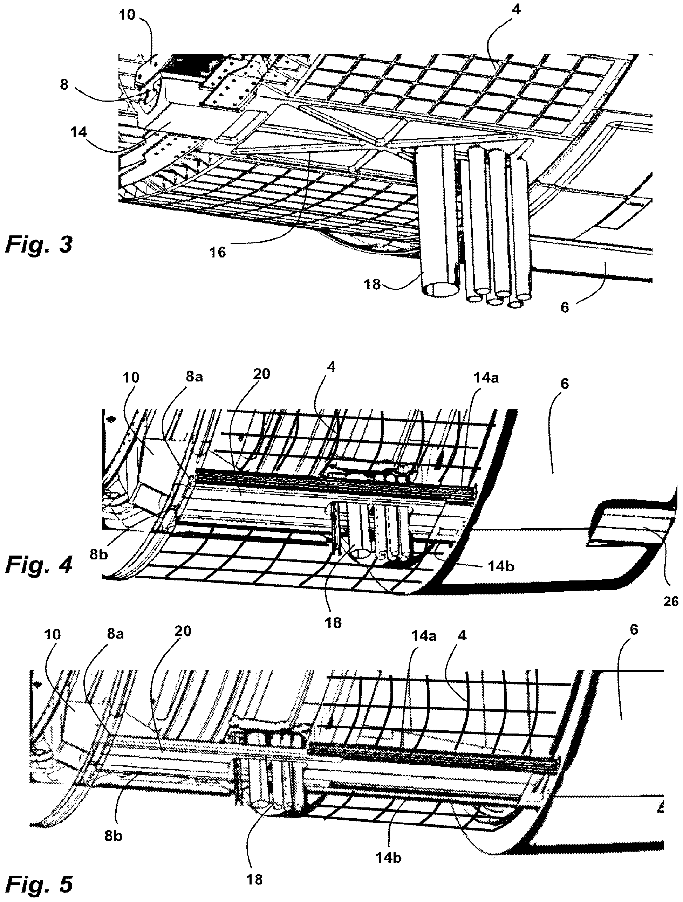

La figure 3 présente en détail le guidage du cadre mobile comportant en partant radialement de l'intérieur un rail fixe 8 lié au carter intermédiaire 10, puis une glissière mobile 14 se prolongeant vers l'arrière par une plaque allongée longitudinalement 16 ajustée entre deux grilles 4.

Afin de prévoir un passage de servitudes dans la position 6h, verticalement vers le bas, il faudrait passer radialement différentes canalisations et câbles électriques de servitudes 18 au travers de la plaque allongée 16 de la glissière 14.

Cette disposition ne peut se réaliser simplement car les conduits et câbles de servitudes 18 doivent traverser radialement le cadre mobile équipé de ses grilles 4, qui coulissent axialement lors des mouvements de l'inverseur de poussée.

La figure 4 présente un système de guidage à 6h du cadre mobile selon l'invention, comportant deux rails de guidage 8a, 8b légèrement espacés, recevant chacun une glissière 14a, 14b. Le cadre mobile est coupé suivant un plan axial, chaque bord de cette coupe étant fixé à une glissière 14a, 14b engagée dans un rail 8a, 8b, ce qui permet d'obtenir une bonne rigidité de ce cadre mobile en passant par le carter intermédiaire 10.

Une plaque d'obturation allongée 20 disposée entre les deux rails 8a, 8b et liée à ces rails, comporte un perçage disposé sur son axe médian constituant un passage des servitudes 18. De cette manière les glissières 14a, 14b coulissent de chaque côté de la plaque d'obturation 20, en laissant le passage des servitudes 18 immobile ce qui permet de réaliser de manière simple les canalisations et câbles de ces servitudes.

Lors du recul du cadre mobile présenté figure 5, chaque glissière 14a, 14b sort fortement vers l'aval de son rail 8a, 8b en laissant à la fin du mouvement une petite partie en prise avec ce rail, permettant d'obtenir un maintien suffisant du cadre mobile avec ses équipements fixés dessus. En pratique comme présenté dans cet exemple, pour une course axiale de 500mm on peut conserver un engagement de la glissière 14a, 14b sur le rail 8a, 8b supérieur à 20% pour obtenir une portée suffisante.

On peut aussi en variante prévoir des dégagements intérieurs dans la nacelle permettant d'obtenir en position d'ouverture complète de l'inverseur de poussée, un engagement de chaque glissière 14a, 14b sur toute la longueur de son rail 8a, 8b.

La plaque d'obturation 20 disposée parallèlement à l'axe principal de la nacelle, présente une extrémité arrière 26 qui se prolonge à l'intérieur du capot mobile 6, en sortant par une fenêtre de ce capot à cause de la courbure arrière du capot qui se rapproche de cet axe principal. En complément on peut ajouter un appendice arrière aérodynamique recouvrant la fenêtre arrière du capot, appelé aussi queue de castor ou « beaver tail » en langue anglaise, afin d'améliorer l'aérodynamisme de la nacelle.

De cette manière en position d'inversion de poussée présentée figure 5, la plaque d'obturation 20 bordée par ses deux glissières 14a, 14b ferme entièrement l'espace disposé entre les deux grilles adjacentes 4. La totalité du flux d'air froid rejeté radialement vers l'extérieur passe alors obligatoirement par les grilles d'inversion de poussée 4, ce qui optimise la poussée de freinage.

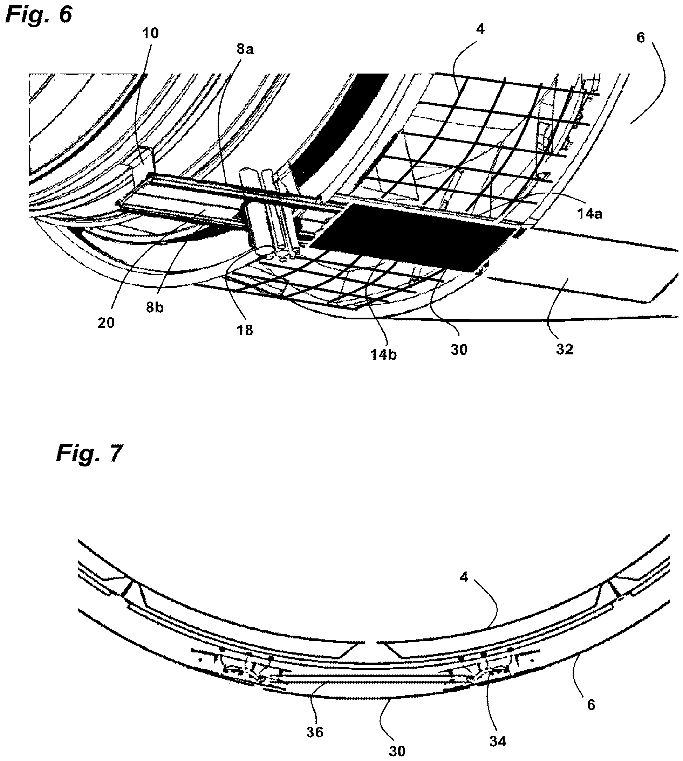

Les figures 6 et 7 présentent un carénage externe fixe 30 formant une plaque allongée disposée en dessous des rails 8a, 8b, en arrière du passage des servitudes 18, qui est fixée au carter intermédiaire 10 de manière à rester immobile lors du coulissement du cadre mobile.

Le capot arrière 6 présente une fenêtre allongée 32 ouverte vers l'avant, correspondant au contour du carénage externe fixe 30, qui avec l'inverseur de poussée ouvert est disposé dans l'alignement de ce carénage externe, juste derrière lui.

Le carénage externe 30 ferme le passage entre les deux grilles adjacentes 4 quand l'inverseur de poussée est ouvert, pour optimiser la poussée de freinage. Quand l'inverseur de poussée est fermé le carénage externe 30 s'ajuste dans la fenêtre allongée 32 du capot arrière 6, afin de retrouver un bon aérodynamisme des surfaces extérieures de la nacelle.

Comme visible sur la figure 7, l'extrémité de chaque capot arrière 6a, 6b comporte des verrous 34 de fixation sur le cadre mobile, que l'on déverrouille pour ouvrir ces capots lors d'opérations de maintenance. Des tiges de liaison 36 passant radialement à l'intérieur du carénage externe fixe 30 et des rails 8a, 8b, relient deux verrous 34 alignés transversalement lorsque ces verrous sont fermés, pour donner aux capots arrière 6 une bonne rigidité au niveau de la fenêtre allongée 32.

## Revendications

1. Nacelle pour turboréacteur comportant un inverseur de poussée à grilles comprenant un cadre circulaire mobile entourant une veine d'air froid, guidé axialement par des rails longitudinaux (8a, 8b) fixés sur un carter intermédiaire (10) entourant la veine d'air froid, et supportant des grilles d'inversion de poussée (4) et des capots arrière mobiles (6), cette nacelle présentant, dans une position à 6 heures, un passage de servitudes (18) débouchant radialement vers l'extérieur du cadre mobile, dans une zone ne comportant pas de structure porteuse traversant radialement la veine d'airfroid, **caractérisée en ce que** le cadre mobile est coupé dans un plan axial au niveau du passage des servitudes (18), et **en ce que** chaque bord de cette coupe du cadre mobile est relié au carter intermédiaire (10) par une glissière (14a, 14b) ajustée sur un rail longitudinal (8a, 8b) disposé chacun d'un côté de ce passage de servitudes (18).

2. Nacelle selon la revendication 1, **caractérisée en ce qu'**elle comporte une plaque d'obturation fixe (20) fermant l'espace entre les deux rails (8a, 8b) recevant les glissières (14).

3. Nacelle selon la revendication 2, **caractérisée** en ce la plaque d'obturation (20) comporte un perçage recevant le passage des servitudes (18).

4. Nacelle selon la revendication 3, **caractérisée** en ce la plaque d'obturation (20) se prolonge par rapport à l'arrière des grilles (4) d'une distance égale à la course dudit cadre mobile.

5. Nacelle selon la revendication 4, **caractérisée en ce que** l'arrière des capots arrière (6) présente une ouverture formant un passage recevant l'extrémité arrière de la plaque d'obturation (20) quand l'inverseur de poussée est fermé.

6. Nacelle selon l'une quelconque des revendications 2 à 5, **caractérisée en ce que** l'inverseur de poussée étant ouvert, les grilles d'inversion (4) s'ajustent sur les glissières (14a, 14b) et la plaque d'obturation (20) s'ajuste entre ces glissières (14a, 14b), de manière à ne pas présenter de passage radial d'air froid en dehors de ces grilles d'inversion (4).

7. Nacelle selon l'une quelconque des revendications précédentes, **caractérisée en ce qu'**elle comporte un carénage extérieur fixe (30) disposé en arrière du passage des servitudes (18), qui s'ajuste sur la forme extérieure des capots arrière (6).

8. Nacelle selon les revendications 2 et 7, **caractérisée en ce que** ladite plaque d'obturation (20) et ledit carénage extérieur fixe (30) forment une seule pièce.

9. Nacelle selon la revendication 8, **caractérisée en ce que** les capots arrière (6) comportent une fenêtre allongée longitudinalement (32), ouverte vers l'avant, recevant de manière ajustée le carénage extérieur (30) quand l'inverseur de poussée est fermé.

10. Nacelle selon la revendication 8, **caractérisée en ce qu'**elle comporte des tiges de liaison (36) passant radialement à l'intérieur du carénage externe (30), et des rails (8a, 8b) reliant chacune deux verrous (34) fixés chacun sur l'extrémité d'un capot arrière (4).

11. Nacelle selon l'une quelconque des revendications précédentes, **caractérisée en ce que** le passage des servitudes (18) comporte des drains d'évacuation de fluides, disposés verticalement en bas de la nacelle.

## Patentansprüche

1. Triebwerksgondel für ein Turbostrahltriebwerk, welche eine Schubumkehr mit Gittern beinhaltet, einen umlaufenden beweglichen Rahmen umfassend, welcher einen Kaltluftstrom umgibt, axial von in Längsrichtung verlaufenden Schienen (8a, 8b) geführt wird, welche auf einem Zwischengehäuse (10) befestigt sind, welches den Kaltluftstrom umgibt, und Schubumkehrgitter (4) und bewegliche hintere Abdeckungen (6) trägt, wobei diese Triebwerksgondel in einer 6-Uhr-Position einen Durchgang für Hilfsmittel (18) aufweist, welcher radial nach außerhalb des beweglichen Rahmens in einen Bereich mündet, welcher keine Trägerstruktur beinhaltet, welche den Kaltluftstrom radial durchquert, **dadurch gekennzeichnet, dass** der bewegliche Rahmen in einer axialen Ebene im Bereich des Durchgangs für Hilfsmittel (18) geschnitten wird, und dadurch, dass jeder Rand dieses Schnitts des beweglichen Rahmens durch eine Gleitschiene (14a, 14b) mit dem Zwischengehäuse (10) verbunden ist, die auf einer in Längsrichtung verlaufenden Schiene (8a, 8b) justiert ist, die jeweils auf einer Seite dieses Durchgangs für Hilfsmittel (18) angeordnet ist.

2. Triebwerksgondel nach Anspruch 1, **dadurch gekennzeichnet, dass** sie eine feststehende Verschlussplatte (20) beinhaltet, welche den Raum zwischen den beiden Schienen (8a, 8b), welche die Gleitschienen (14) aufnehmen, schießt.

3. Triebwerksgondel nach Anspruch 2, **dadurch gekennzeichnet, dass** die Verschlussplatte (20) eine Bohrung beinhaltet, welche den Durchgang für Hilfsmittel (18) aufnimmt.

4. Triebwerksgondel nach Anspruch 3, **dadurch gekennzeichnet, dass** sich die Verschlussplatte (20) in Bezug auf die Rückseite der Gitter (4) um eine Entfernung gleich dem Verfahrweg des beweglichen Rahmens fortsetzt.

5. Triebwerksgondel nach Anspruch 4, **dadurch gekennzeichnet, dass** die Rückseite der hinteren Abdeckungen (6) eine Öffnung aufweist, die einen Durchgang bildet, welcher das hintere Ende der Verschlussplatte (20) aufnimmt, wenn die Schubumkehr geschlossen ist.

6. Triebwerksgondel nach einem der Ansprüche 2 bis 5, **dadurch gekennzeichnet, dass**, wenn die Schubumkehr offen ist, sich die Umkehrgitter (4) auf den Gleitschienen (14a, 14b) justieren, und sich die Verschlussplatte (20) zwischen diesen Gleitschienen (14a, 14b) justiert, um keinen radialen Kaltluftdurchgang außerhalb dieser Umkehrgitter (4) aufzuweisen.

7. Triebwerksgondel nach einem der vorstehenden Ansprüche, **dadurch gekennzeichnet, dass** sie eine feststehende Außenverkleidung (30) beinhaltet, welche hinter dem Durchgang für Hilfsmittel (18) angeordnet ist, welche sich an der Außenform der hinteren Abdeckungen (6) justiert.

8. Triebwerksgondel nach den Ansprüchen 2 und 7, **dadurch gekennzeichnet, dass** die Verschlussplatte (20) und die feststehende Außenverkleidung (30) ein einziges Teil bilden.

9. Triebwerksgondel nach Anspruch 8, **dadurch gekennzeichnet, dass** die hinteren Abdeckungen (6) ein nach vorne offenes, in Längsrichtung gestrecktes Fenster (32) beinhalten, welches in justierter Weise die Außenverkleidung (30) aufnimmt, wenn die Schubumkehr geschlossen ist.

10. Triebwerksgondel nach Anspruch 8, **dadurch gekennzeichnet, dass** sie Verbindungsstangen (36) beinhaltet, welche radial innerhalb der Außenverkleidung (30) verlaufen, und Schienen (8a, 8b), welche jeweils zwei Riegel (34) verbinden, welche jeweils am Ende einer hinteren Abdeckung (4) befestigt sind.

11. Triebwerksgondel nach einem der vorstehenden Ansprüche, **dadurch gekennzeichnet, dass** der Durchgang für Hilfsmittel (18) Flüssigkeitsausleitdrainagen beinhaltet, welche vertikal unten an der Triebwerksgondel angeordnet sind.

## Claims

1. A nacelle for a turbojet engine including a cascade thrust reverser comprising a movable circular frame surrounding a cold air flow path, guided axially by longitudinal rails (8a, 8b) fastened on an intermediate casing (10) surrounding the cold air flow path, and supporting thrust reverser cascades (4) and movable rear cowls (6), this nacelle having, in a 6 o'clock position, a passage of ancillaries (18) opening radially outwardly of the movable frame, in an area including no support structure passing radially through the cold air flow path, **characterized in that** the movable frame is cut in an axial plane at the passage of the ancillaries (18), and **in that** each edge of this section of the movable frame is connected to the intermediate casing (10) by a slide rail (14a, 14b) adjusted on a longitudinal rail (8a, 8b) each disposed on one side of this passage of ancillaries (18).

2. The nacelle according to claim 1, **characterized in that** it includes a fixed shutter plate (20) closing the space between the two rails (8a, 8b) receiving the slide rail (14).

3. The nacelle according to claim 2, **characterized in that** the shutter plate (20) includes a bore receiving the passage of the ancillaries (18).

4. The nacelle according to claim 3, **characterized in that** the shutter plate (20) extends relative to the rear of the cascades (4) by a distance equal to the stroke of said movable frame.

5. The nacelle according to claim 4, **characterized in that** the rear of the rear cowls (6) has an opening forming a passage receiving the rear end of the shutter plate (20) when the thrust reverser is closed.

6. The nacelle according to any one of claims 2 to 5, **characterized in that** the thrust reverser being open, the thrust reverser cascades (4) are adjusted on the slide rails (14a, 14b) and the shutter plate (20) is adjusted between these slide rails (14a, 14b), so as not to have a cold air radial passage outside these thrust reverser cascades (4).

7. The nacelle according to any one of the preceding claims, **characterized in that** it includes a fixed outer fairing (30) disposed rearward of the passage of the ancillaries (18), which is adjusted on the outer shape of the rear cowls (6).

8. The nacelle according to claims 2 and 7, **characterized in that** said shutter plate (20) and said fixed outer fairing (30) form a single piece.

9. The nacelle according to claim 8, **characterized in that** the rear cowls (6) include a forwardly open longitudinally elongated window (32) receiving, in an adjusted manner, the outer fairing (30) when the thrust reverser is closed.

10. The nacelle according to claim 8, **characterized in that** it includes connecting rods (36) passing radially inside the outer fairing (30) and rails (8a, 8b), each connecting two locks (34) each fastened on the end of a rear cowl (4).

11. The nacelle according to any one of the preceding claims, **characterized in that** the passage of the ancillaries (18) includes drains for discharging fluids, disposed vertically at the bottom of the nacelle.
